# EUROPÄISCHE PATENTANMELDUNG

(11) **EP 0 862 977 A2**
(43) Veröffentlichungstag der Anmeldung: **09.09.1998**
(21) Anmeldenummer: 98107901.5
(22) Anmeldetag: 30.06.1994
(51) Int. Cl.: B29B 17/00

(54) **Formstück und Verfahren zur Herstellung des Formstücks**

(30) Priorität: 08.07.1993 DE 4322784; 09.11.1993 DE 4338199
(62) Teilanmeldung aus: 94110185.9
(71) Anmelder: Kampffmeyer, Gerhard, D-67157 Wachenheim (DE)
(72) Erfinder: Kampffmeyer, Gerhard, Dipl.-Ing., 67157 Wachenheim (DE); Reyer, Georg, 42477 Radevormwald (DE)
(74) Vertreter: Klickow, Hans-Henning

(57) **Zusammenfassung**

Die Erfindung betrifft ein Formstück aus verschiedenen Fraktionen thermoplastischer Kunststoffe sowie ein Verfahren zu seiner Herstellung. Der Erfindung liegt die Aufgabe zugrunde, ein Formstück der eingangs genannten Gattung sowie ein Verfahren zu dessen Herstellung zu schaffen, wobei das Formstück kostengünstig ohne zusätzliche Füllstoffe aus Abfällen zusammengesetzt ist, ein Auslaugen des Kernbereiches ausschließt und dennoch als Fertigprodukt eine überraschend hohe thermische Druck-, Biege- sowie Säurefestigkeit aufweist.

Das Formstück besteht aus einem thermoplastisch erhitzten, mit einem Treibmittel aufgeschäumten, in einer Spritzgußform gepreßten sowie anschließend entlüfteten Material und weist in seinen Randbereichen ein dichteres Gefüge als in seinem Kernbereich auf.

## Beschreibung

Die Erfindung betrifft Verfahren zur Herstellung von Formstücken aus verschiedenen Fraktionen von Kunststoffen, die zerkleinert, gemischt, erwärmt und mindestens teilweise plastifiziert werden sowie bei dem die plastifizierte Kunststoffmasse in die Form eingespritzt wird und bei dem niedrigschmelzende steile der Kunststoffmasse in einen äußeren Bereich des geformten unausgehärteten Formstückes transportiert werden.

Die Erfindung betrifft darüber hinaus ein Formstuck aus verschiedenen Fraktionen thermoplastischer Kunststoffe, das aus einem thermoplastisch erhitzten, mit einem Treibmittel aufgeschäumten, in einer Spritzgußform gepreßten sowie entlüfteten und gekühlten Formstein besteht, der aus einer Mischung von Kunststoffabfällen der Abfallindustrie sowie aus Füllstoffen besteht und der in seinen Randbereichen ein dichteres Gefüge als in seinem Kernbereich aufweist.

Aus der DE-OS 24 02 976 ist ein Konstruktionsmaterial aus einer Mischung thermoplastischer Kunststoffe und mit mindestens einem Füllstoff bekannt, welches dadurch gekennzeichnet ist, daß die Mischung aus Komponenten zumindest thermoplastische Kunststoffe und mindestens einen Füllstoff mineralischer und/oder organischer Art enthält, wobei der Füllstoff oder die Füllstoffe mindestens den gleichen Gewichtsanteil am Gesamtgewicht der Mischung ausmachen wie die thermoplastischen Kunststoffe.

Als Füllstoff werden Holzspäne, Holzmehl, Asbeststaub, Asbestfasern, Torf, Schwefel, Kieselerde, Sand, Graphit, Metallspäne, Asche von Müllverbrennungs-Anlagen und Abfälle aus wärmeaushärtenden Kunststoffen angegeben. Soweit es sich um Füllstoffe anorganischer Art handelt, hat in der Vergangenheit die Erfahrung gezeigt, daß diese zu inhomogenen Konstruktionsmaterialien mit geringer Bruchfestigkeit führen. Bei Holzspänen und Holzmehl besteht beim Herstellungsprozeß die Gefahr einer Entflammung. Asbeststaub und Abbestfasern konnten dabei nicht so gebunden werden, daß ein Auslaugen in die Atmosphäre vermieden wird. Abfälle aus wärmeaushärtenden Kunststoffen erfordern wiederum als Füllstoff eine zusätzliche Erwärmung, da sie unter Wärmeeinwirkung aushärten müssen. Keine dieser Konstruktionsmaterialien ist bislang hergestellt oder sonstwie benutzt worden.

Auch das in der DE-OS 24 02 976 offenbarte Verfahren gibt keinen konkreten Anhaltspunkt dafür, wie die darin genannten Kunststoffe zu einem konkreten Produkt überführt werden können. Einerseits besteht bei den dort offenbarten Temperaturen der Vermengung von Kunststoffmischungen und Füllstoffen von 240°C bis 300°C die Gefahr einer Entflammung der Füllstoffe, weil diese auch aus Holzspänen und sonstigem leicht entflammbarem Material bestehen sollen. Andererseits ist nicht konkret dargelegt, wie und auf welche Weise Fertigprodukte daraus hergestellt werden können. Dabei ist wesentlich, daß bei inhomogenen Produkten dieser Art die meisten Kunststoff-Bearbeitungsverfahren nicht anwendbar sind, wie z.B. Extrudieren, Strangpressen, Kalandrieren etc., und zu anderen Verfahren ein Treibmittel erforderlich ist, welches in dieser Druckschrift nicht offenbart wird.

In der DE-OS 24 44 420 ist ein Konstruktionsmaterial aus einer Mischung offenbart, welche als Komponenten thermoplastische Kunststoffe aus mindestens einem Füllstoff mineralischer und/oder organischer Art enthält, wobei der Füllstoff eine Umhüllung aus Silicat-Material, insbesondere Natriumsilicat, aufweisen soll. Als weitere Füllstoffe werden erneut Holzspäne, Holzmehl, Asbeststaub, Asbestfasern, Torf, Schwefel, Kieselerde, Sand, Graphit, Metallspäne, Asche von Müllverbrennungsanlagen und Abfälle aus wärmeaushärtenden Kunststoffen angeboten. Dabei sollen die Füllstoffe vor der Vermischung mit einer Kunststoffkomponente in einem Vormischer erwärmt, vermischt und überzogen werden. Dieses Mischen und Überziehen soll in einem Vermischer in einem Vakuum bei einer Temperatur von 70°C bis 100°C erfolgen. Auch von diesem aufwendigen Verfahren sind bislang keine Produkte bekannt, die damit jeweils hergestellt worden wären. Das dürfte auch insofern schwierig sein, weil die dort offenbarte Mischung mittels extrudierter Stränge, auch wenn sie in eine Preßform gelangen, stets nach der Mischung des Materials mit unterschiedlichen großen Lunkerstellen behaftet ist, da es an einem Treibmittel fehlt.

Ausweislich dieses Verfahrens soll die Mischung im Mischer unter Vakuum sowie unter Hinzusetzung eines inerten neutralen Gases erfolgen. Dabei kommt dem inerten Gas im Mischer lediglich die Funktion der Erzeugung einer Art neutraler Außenatmosphäre ohne Infiltrationseffekt in die Mischung zu. Dementsprechend muß das daraus enthaltene Produkt mit einer relativ starken Porosität und entsprechend schlechten Festigkeitseigenschaften behaftet sein. Auch ein Auslaugen der darin enthaltenen Kontaminationsstoffe kann aufgrund der unverschlossenen Kapillarwege nicht sichergestellt werden.

Aus der Zeitschrift "Plastics Engineering", Bd. 44, Nr. 6, Juni 1988, Brookfield, CT, USA, Seiten 30-41 ist es bekannt, im Extrusionsverfahren teilweise plastifizierte Kunststoffabfälle zu verarbeiten und bei dem hergestellten Formstück im Randbereich ein dichteres Gefüge als im Kernbereich hervorzurufen. Dies erfolgt durch gezielte Materialzufuhr von Materialien unterschiedlicher Konsistenz im Bereich der Extrusionseinrichtung.

In der FR-A-2 191 984 wird ein Verfahren zur Verarbeitung von plastifiziertem thermoplastischen Material beschrieben, bei dem eine Formgebung im Extrusionsverfahren oder in Spritzgußverfahren erfolgt. Durch eine Nutzung von Wasserdampf als Treibmittel wird eine faserige Struktur des Verfahrensproduktes erreicht.

Von diesem Stand der Technik ausgehend, der sowohl bei der Bildung des Verfahrensanspruches als auch der Produktansprüche die Oberbegriffe der Ansprüche stützt, liegt der Erfindung die Aufgabe zugrunde, ein Formstück der eingangs genannten Gattung ebenso zu schaffen wie ein Verfahren zu dessen Herstellung, welches kostengünstig ohne zusätzliche neuwertige Füllstoffe ausschließlich aus Abfallprodukten zusammengesetzt ist, ein Auslaugen seines Kernbereiches ausschließt und dennoch als Fertigprodukt eine überraschend hohe thermische Belastbarkeit sowie Druck-, Biege- und eine Säurefestigkeit gewährleistet.

Diese Aufgabe wird erfindungsgemäß hinsichtlich des Verfahrens dadurch gelöst, daß in einem inneren Bereich des Formstückes eine grobere Struktur als in einem äußeren Bereich des Formstückes erzeugt wird, daß im äußeren Bereich des Formstückes Polyethylen als Bindemittel verwendet wird und daß entlang mindestens eines Teiles eines äußeren Umfanges der Formstücke Abstandsleisten durch den Spritzgußvorgang ausgeformt werden.

Die Aufgabe wird erfindungsgemäß hinsichtlich des Produktes dadurch gelöst, daß im äußeren Bereich des Formstückes die gut fließfähigen Bestandteile der Kunststoffmasse angeordnet sind und daß nach innen eine zunehmend grobere Struktur vorliegt, daß vor der Plastifizierung der Kunststoffmasse ein Zerkleinern, Mischen sowie Homogenisieren durchgeführt wird, daß die Formstücke Abstandsleisten aufweisen und daß die Kunststoffmasse Polyäthylen enthält.

Ein solcher Formstein zeigt selbst nach einem Kochprozeß von fünf Stunden keine Wasseraufnahme oder Auslaugungstendenzen und bei einer Druckbelastung von fünf Tonnen keine Verformung. Nach Fallversuchen aus zehn Meter Höhe konnten keine Verformungen oder Absplitterungen festgestellt werden. Das gleiche Resultat zeigte sich bei einer Lagerung von drei Tagen bei -18°C. Auch Öle, Benzine oder andere Kohlenwasserstoffe und auch Säuren, konnten in den Formstein nicht eindringen, da die darin enthaltenen Polyethylene und Polyamide, die sich mit einem besonders dichten Gefüge in seinen Randbereichen befinden, säurefest sind. Die Benutzung der Formsteine als Verbundsteine in einer Fabrikauffahrt unter täglicher Belastung von Lkw's, Gabelstaplern und Peronen führte zu keinen Verformungen und/oder Verschiebungen.

Nach eine ersten Ausführungsform besteht das Formstück aus einem quaderförmigen Formstein in Form eines Verbundsteines mit einer Größe von 200 mm x 100 mm x 60 mm und einem Gewicht von ca. 840 g. Als Verbundstein kann es mit einer rechteckigen, quadratischen oder mehreckigen Trittfläche versehen werden, und senkrecht zu seiner Trittfläche eine zick-zack- oder gewellte Form aufweisen.

Nach einer weiteren Alternative ist der Formstein in Form eines Kreisringes mit konkavem Abschnitt gebildet.

Nach vorteilhaften Weiterbildungen ist das Formstück als Gitterstein mit gleichmäßigen quadratischen Öffnungen in Reihen- oder Diagonalanordnung ausgebildet.

Um sämtliche Formsteine im Verbund anordnen und verfestigen zu können, sind sie an ihren Seitenkanten mit angeformten Abstandsleisten versehen, die sich nahezu über die gesamte Höhe des Formsteines erstrecken und im Querschnitt entweder eine Rechteckform oder eine Kreisabschnittsform aufweisen. Dadurch können die Fugen zwischen den einzelnen Formsteinen mit üblichem Sand oder sonstigen anorganischen Füllmaterialien verfüllt und drainagefähig verfestigt werden.

Zur Vermeidung von punktuellen Belastungen und eventuellen Absplitterungen ist jeder Formstein an seinen Oberflächenkanten mit einer unter 45° verlaufenden und ca. 6 mm bis 10 mm breiten umlaufenden Randfase versehen.

Zur Erhöhung der Rutschfestigkeit seiner Trittfläche sowie zur Verbesserung seiner Optik ist der Formstein an seiner Trittfläche mit Riefen und Rillen versehen ist, die entweder symmetrisch oder asymmetrisch verlaufen oder figürliche Muster von geometrischen Formen, wie Sechsecke, Dreiecke, Vierecke, sonstige Mehrecke oder ornamentartige Gegenstände, wie Blumenrosetten, Stadtwappen oder dergleichen bilden.

Der besondere Vorteil dieses Formsteines beruht darin, daß er ausschließlich aus kostenfrei verfügbaren Abfallprodukten zusammengesetzt werden kann und als Füllstoff keine zusätzlichen organischen oder anorganischen Materialien erfordert, wie z.B. Natrium-Silicate oder dgl., welche seine Herstellung verteuern und seine Festigkeitseigenschaften vermindern. Ein besonderer Vorteil des neuen Formsteines ist einerseits in seiner rauhen Oberflächenstruktur sowie andererseits in seiner Eigenschaft als vollwertig einzusetzbares Produkt ohne jede Einfallerscheinung für die bisher aus anorganischen Stoffen zusammengesetzten Verbundsteine zu sehen.

Ein erfindungsgemäßes Verfahren zur Herstellung eines derartigen Formsteines ist weiterhin dadurch gekennzeichnet, daß Kunststoff-Abfälle der Abfallindustrie sowie Füllstoffe insbesondere Kunststoff-Teppich-Reste auf eine maximale Korngröße von 6 mm gemahlen und sodann in folgenden alternativen Gewichtsprozenten
a) 70 % bis 90 % sortierte Kunststoffe des Haushaltsabfalls und 10 % bis 30 % aus Kunststoff-Teppichresten mit Polyamiden, Acrylen, Klebern, Gummi und Schaumstoff oder
b) 70 % bis 90 % Kunststoffe des Haushaltsabfalls und 10 % bis 30 % Abfall-Reste aus der Herstellung von sanitären Produkten, wie Windelhöschen, Slip-Einlagen, Betteinlagen etc., mit Zellstoff, Polyethylenfolie und feuchtigkeitsbindendem Polyacrylat oder
c) 70 % bis 90 % Kunststoffe des Haushaltsabfalls, 5 % bis 15 % Kunststoff-Teppichreste mit Polyamiden, Acrylen, Klebern, Gummi und Schaumstoff und 5 % bis 10 % Abfall-Reste aus der Herstellung von sanitären Produkten, wie Windelhöschen, Slip-Einlagen, Betteinlagen etc., mit Zellstoff, Polyethylenfolle und feuchtigkeitsbindendem Polyacrylat,
miteinander gemischt werden, die Mischung auf eine Restfeuchte von 5 % bis 10 % als Treibmittel getrocknet, hiernach auf 130° bis maximal 150°C erhitzt, in aufgeschäumtem Zustand in eine Spritzgußform gepreßt wird. Anschließend kann die den Formstein aufblühende Restfeuchte zum größten Teil durch Anstechen des Formstückes entlüftet werden.

Durch dieses Verfahren können mit drei alternativen Mischungen Formsteine hergestellt werden, die in ihren äußeren Querschnittsrandbereichen ein wesentlich dichteres Gefüge als in ihren Kernen aufweisen. Dies liegt daran, daß die im Mischungsmaterial enthaltene Restfeuchte von 5 % bis 10 % als Treibmittel ausgenutzt wird, wodurch nach der Erhitzung auf etwa 150°C die Mischung in aufgeschäumten Zustand in eine Spritzgußform gepreßt werden kann. Dabei scheinen in überraschender Weise die gut fließfähigen Stoffe, wie z.B. Polyethylen und Polyamid, unter dem Druck der Restfeuchte als Treibmittel in die Randbereiche des Formsteins zu gelangen, wo sie eine dichtende, schützende sowie mechanisch hoch belastbare Wandung um den erheblich grobkörnigeren Kernbereich bilden. Ohne diese Restfeuchte und damit ohne Treibmittel weisen derartige Spritzgußprodukte erhebliche Einfallerscheinungeren auf, die sie beispielsweise in der Bauindustrie als Fertigprodukte ungeeignet erscheinen lassen.

Nach dem Ziehen der Form bildet der Formling in den großflächigen Oberflächenbereichen eine aufgeblühte, konvexe Form. Diese Form wird durch das Treibmittel der Restfeuchte bedingt. Durch Anstechen des Spitzgußformlings kann eine Entlüftung dieser Restfeuchte erfolgen. Hiernach nimmt der Formling erneut die gewünschte Flächenform gemäß der Spritzgußform ein. Dann wird der Formling atmosphärischer Luft ausgesetzt und ist nach Auskühlen seines Kernes unmittelbar als Fertigprodukt einsetzbar.

Dabei läßt es das erfinderische Verfahren auch zu, daß in der Mischung noch 4 % an verunreinigenden Metallen in Form von Folienverschlüssen, Aluminiumfolie, Becher-Deckeln oder dgl. enthalten sind.

Die in dem Formstein enthaltenen Kunststoff-Teppich-Reste setzen sich im wesentlichen aus ca. 80 % Polyamid, 17 % Gummierung und 3 % Kleber oder aus 75 % bis 80 % Polyamid, 20 % bis 22 % Acryl und 3 % bis 5 % Schaumstoff zusammen. Die unterschiedlichen Zusammensetzungen rühren von der Gesamthöhe, insbesondere von der Höhe und Dichte des aus Polyamid bestehenden Flors des Teppichs her.

Die weiterhin in dem Formstein eingeformten Zellstoffe bestehen aus Zellstoff-Resten der sanitären Industrieherstellung von Damenbinden, Betteinlagen. Tampons, Windelhöschen, Slipeinlagen oder OP-Tischbezügen, die ca. 60 % bis 70 % Zellstoff, 27 % bis 37 % Polyethylenfolie und ca. 3 % feuchtigkeitsbindendes Polyacrylat enthalten.

Die den Hauptanteil der Formstücke ausmachenden Kunststoff-Abfälle können aus der Abfallindustrie, insbesondere dem "Dualen System" (Grüner Punkt) stammen, die im wesentlichen aus Folien von Hoch- und Niederdruck-Polyethylen, aus Behältern von Hoch- und Niederdruck-Polyethylen und Polypropylen sowie aus Bechern von Polypropylen und Polystyrol zusammengesetzt sind.

Die fertige Mischung mit einer Korngröße von maximal 10 mm wird auf einen Feuchtigkeitsgehalt von 3 % bis 10 %, bezogen auf die Trockensubstanz, vorgetrocknet, bevor sie in einer Spritzgußmaschine auf ca. 130° bis maximal 150°C erhitzt und die sich nach Erhitzung ergebende, aufgeschäumte, plastische Formmasse mittels einer Spritzgußmaschine in Formen eingespritzt wird. Dabei ist wesentlich, daß das gesamte Material aufschäumt, was durch die Restfeuchte von 3 % bis 10 % Wasser als Treibmittel erzielt wird.

Um den Formstücken eine ansprechende Optik zu verleihen, wird die Mischung der jeweils verwendeten Fraktionen vor dem Vortrocknen im Mischer mit einem Farbstoff eingefärbt. Dieser Farbstoff kann über die gesamte Farbpalette von Weiß, Gelb, Betongrau, Ziegelrot, Braun etc. bis Schwarz reichen.

Die vorbekannten Vorrichtungen und Verfahren gemäß der DE-OS 24 02 970 und DE-OS 24 44 420 offenbaren keine Zerkleinerungseinrichtung und auch keine Maßnahme zum Einsatz eines Treibmittels. Dadurch kann das je nach unterschiedlichem Verfahren hergestellte Produkt nur mit höchst unterschiedlichen Inhomogenitäten und höchst unterschiedlichen Einfallerscheinungen behaftet sein.

Eine vorgeschlagene Vorrichtung zur Durchführung des vorbeschriebenen Verfahrens schließt diese Nachteile dadurch aus, daß sie aus einer Dosiereinrichtung, einer Mühle, einem Mischer, einer Vortrockeneinrichtung, einer Spritzgußmaschine mit Erhitzungseinrichtung, einer dieser zugeordneten Spritzgußform und einer Anstechvorrichtung für die Formstücke besteht. Dabei kann die Mühle von einer handelsüblichen Messermühle gebildet werden, bei welcher eine Dosiereinrichtung mit Waage vorgeordnet sowie ein Mischer nachgeordnet sind. In der Vortrockeneinrichtung werden die Abfälle auf einen Restfeuchtegehalt von 3 % bis 10 % vorgetrocknet. Diese Restfeuchte wird sodann als Treibmittel in der Spritzgußmaschine ausgenutzt, wodurch das gesamte Material aufgeschäumt wird. Unter dem Druck dieses Treibmittels werden die gut fließfähigen Bestandteile, wie beispielsweise Polyehtylen und Polyamid in die äußeren Randbereiche des Formlings gepreßt und umhüllen mit relativ dichten Gefügewandungen den mit einem groberen Gefüge sowie eventuellen Lunkern versehenen Kern des Formlings.

Eine zusätzliche Anstechvorrichtung kann dazu dienen, den erhitzten Wasserdampf und/oder das Wasserdampf/Luftgemisch aus dem aufgeblähten Formling entweichen zu lassen, wodurch dieser seine der Spritzgußform entsprechende, ursprüngliche ebene Oberflächenform ohne Einfallerscheinungen einnimmt.

Zur Sicherstellung eines kontinuierlichen Betriebes sind zwischen der Mühle, der Dosiereinrichtung, dem Mischer, der Vortrockeneinrichtung und der Spritzgußmaschine jeweils Transporteinrichtungen in Form von Transportbändern oder Rutschen angeordnet.

Nach einer besonders vorteilhaften Weiterbildung der Vorrichtung besteht die Spritzgußform aus mehreren nach Art eines Karussells angeordneten Spritzgußformen, die in einem bestimmbaren Zeittakt vor die Düse der Spritzgußmaschine schwenkbar und weiterschwenkbar sind. Während des Weiterschwenkens einer Spritzgußform und der Einschwenkung der darauffolgenden Spritzgußform vor die Düse der Spritzgußmaschine bleibt diese verschlossen. Mit einem Zeittakt von ca. 20 sek. bis 60 sek. kann auf diese Weise der vorbeschriebene Kunststoff-Abfall nicht nur wirtschaftlich entsorgt, sondern zur Herstellung eines sofort verwendbaren Fertigproduktes weiterverwendet werden. Dabei wird der Zeittakt im wesentlichen von der Kühlung der äußeren Randbereiche des Formstückes bestimmt. Je rascher diese Kühlung erfolgt, um so schneller kann der Zeittakt gestaltet werden, da die längerdauernde Auskühlung des Kerns des Formstückes auch außerhalb der Spritzgußform erfolgen kann.

Ferner ist eine jede Spritzgußform vor ihrem Ziehen über eine Rutsche mit sich verengendem Querschnitt schwenkbar. Beim Ziehen fällt der Formling auf diese Rutsche, an deren Ende optional ein Endschalter vorgesehen sein kann, der unter der Schwerkraft-Komponente des auf ihn einwirkenden Formkörpers die Einstecheinrichtung zur Entlüftung des Wasserdampf/Luftgemisches innerhalb des Formlings auslösen kann. Grundsätzlich ist auch eine Realisierung ohne Einstechvorrichtung denkbar.

Die Erfindung wird nachfolgend anhand einer Vorrichtung zur Herstellung der erfindungsgemäßen Formstücke sowie anhand unterschiedlicher Formen von Formsteinen näher erläutert. Dabei zeigen:
- Fig. 1: eine Vorrichtung zur Durchführung des Verfahren zur Herstellung von Formstücken mit einer Dosiereinrichtung, eine Mühle, einem Mischer, einer Vortrockeneinrichtung, einer Spritzgußmaschine mit karussellartig angeordneten Spritzgußformen und einer Anstechvorrichtung,
- Fig. 2: eine Draufsicht des quaderförmigen Formstückes,
- Fig. 3: eine Seitenansicht gemäß Blickrichtung III von Fig. 2,
- Fig. 4: eine Stirnansicht gemäß Blickrichtung IV von Fig. 3,
- Fig. 5: eine Draufsicht eines Verbundsteines mit quadratischer Trittfläche und kreuzartig verlaufenden Riefen,
- Fig. 6: eine Seitenansicht in Richtung des Pfeiles VI von Fig. 5,
- Fig. 7: eine Draufsicht auf einen sechseckigen Formstein,
- Fig. 8: eine Seitenansicht in Richtung des Pfeiles VIII von Fig. 7,
- Fig. 9: eine Draufsicht auf einen quadratischen Formstein,
- Fig. 10: eine Seitenansicht in Richtung des Pfeiles X von Fig. 9,
- Fig. 11: eine Draufsicht auf einen Formstein in Form eines Kreisringes mit konkavem Abschnitt,
- Fig. 12: eine Seitenansicht in Richtung des Pfeiles XII von Fig. 11,
- Fig. 13: eine Stirnansicht in Richtung des Pfeiles XIII von Fig. 11,
- Fig. 14: eine Draufsicht auf einen zu seiner Trittfläche zick-zack-förmig ausgebildeten Formstein,
- Fig. 15: eine Seitenansicht in Richtung des Pfeiles XV von Fig. 14,
- Fig. 16: eine Stirnansicht in Richtung des Pfeiles XVI von Fig. 14,
- Fig. 17: eine Draufsicht auf einen gitterförmigen Formstein mit einer rechteckigen Durchtrittsöffnung,
- Fig. 18: eine Seitenansicht in Richtung des Pfeiles XVIII von Fig. 17.
- Fig. 19: eine Draufsicht auf einen als Gitterstein mit gleichmäßigen quadratischen Öffnungen in Reihenanordnung ausgebildeten Formstein,
- Fig. 20: eine Seitenansicht in Richtung des Pfeiles XX von Fig. 19,
- Fig. 21: eine Stirnansicht in Richtung des Pfeiles XXI von Fig. 19,
- Fig. 22: eine Draufsicht auf einen mit gleichmäßigen quadratischen Öffnungen in Diagonalanordnung als Gitterstein ausgebildeten Formstein und
- Fig. 23: eine Seitenansicht in Richtung des Pfeiles XXIII von Fig. 22.

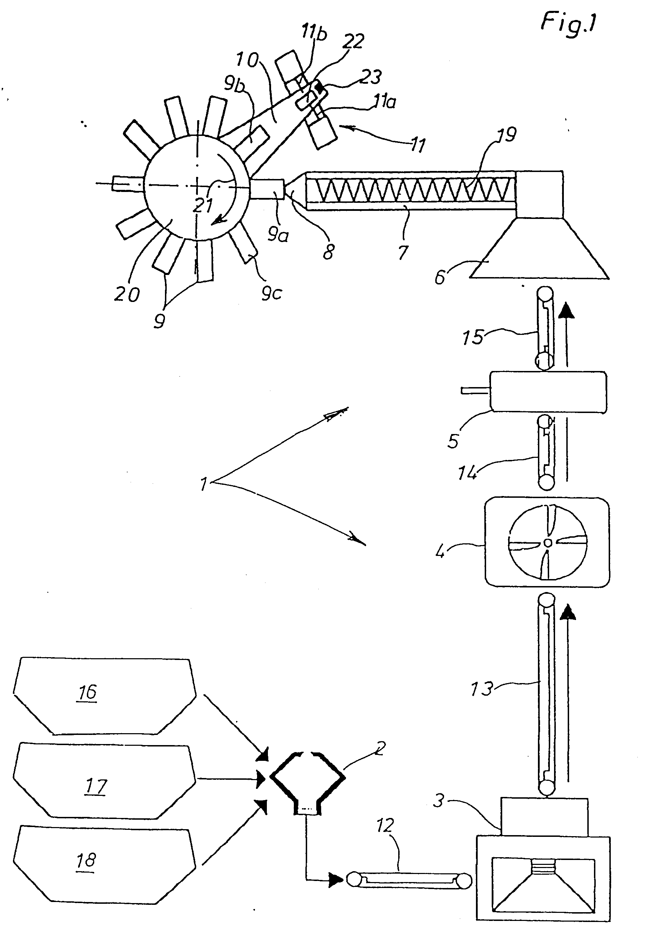

Gemäß Fig. 1 setzt sich die vorgeschlagene Vorrichtung 1 aus einer Dosiereinrichtung 2, einer Mühle 3, einem Mischer 4, einer Vortrockeneinrichtung 5, einer Spritzgußmaschine 6 mit Erhitzungseinrichtung 7 und Düse 8 zusammen. Der Düse 8 sind die karussellartig angeordneten Spritzgußformen 9 zugeordnet, denen eine Rutsche 10 mit Anstechvorrichtung 11 nachgeordnet ist.

Zwischen der Dosiereinrichtung 2 und der Mühle 3 sowie zwischen dieser 3 und dem Mischer 4 sind Förderbänder 12,13 angeordnet, die bei entsprechender höhenunterschiedlicher Anordnung auch durch Rutschen ersetzt werden können.

Zwischen dem Mischer 4 und der Vortrockeneinrichtung 5 sowie zwischen letzterer Vortrockeneinrichtung 5 und der Spritzgußmaschine 6 sind weitere Transportbänder 14,15 angeordnet. Auch diese können gegebenenfalls durch entsprechende Rutschen ersetzt werden.

Aus Containern 16 bis 18 entnimmt die Dosiereinrichtung 2 mit entsprechendem Mischungsverhältnis die darin gelagerten, aussortierten Kunststoff-Abfälle, von welcher sie über das Transportband 12 zur Mühle 3 gelangen. Dabei sind folgende drei Mischungsalternativen möglich:

Nach einer ersten Mischungsalternative werden aus dem Behälter 16 beispielsweise 70 % bis 90 % (Gewichtsprozente) sortierter Kunststoffe des Haushalts-Abfalls nach dem "Dualen System" des "Grünen Punktes" und aus dem Behälter 17 beispielsweise 10 % bis 30 % (Gewichtsprozente) aus Kunststoff-Teppich-Resten mit Polyamiden, Acrylen, Klebern, Gummi und Schaumstoff entnommen.

Nach einer zweiten Mischungsalternative werden aus dem Behälter 16 z.B. 70 % bis 90 % (Gewichtsprozente) sortierter Kunststoffe des Haushaltsabfalls nach dem "Dualen System" und aus dem Behälter 18 beispielsweise 10 % bis 30 % (Gewichtsprozente) Abfallreste aus der Herstellung von sanitären Produkten, wie Windelhöschen, Slipeinlagen, Betteinlagen etc., mit Zellstoff, Polyethylenfolie und feuchtigkeitsbindendem Polyarcylat gemischt.

Nach einer dritten Mischungsalternative werden aus dem Behälter 16 beispielsweise 70 bis 90 % (Gewichtsprozente ) sortierter Kunststoffe des Haushaltabfalls des "Dualen Systems", aus dem Behälter 17 beispielsweise 5 % bis 15 % (Gewichtsprozente) von Kunststoff-Teppich-Resten mit Plyamiden, Acrylen, Klebern, Gummi und Schaumstoff, aus dem Behälter 18 beispielsweise 5 % bis 10 % (Gewichtsprozente) Abfallreste aus der Herstellung der vorgenannten sanitären Produkte entnommen und über das Förderband 12 in die Mühle 3 befördert.

In der Mühle 3, die beispielsweise aus einer Messermühle bestehen kann, werden die vorgenannten Kunststoffe auf eine Korngröße von maximal 6 mm verkleinert. Die so verkleinerten Kunststoffabfälle gelangen über das Transportband 13 in den Mischer 4, in welchem eine homogene Mischung hergestellt wird. Hiernach wird diese homogene Mischung über das Transportband 14 in die Vortrockeneinrichtung 5 gefördert. In dieser erfolgt eine Vortrocknung dergestalt, daß die Mischung nur noch eine Restfeuchte von 3 % bis 10 % bezogen auf ihre Trockensubstanz enthält. Diese Restfeuchte wird noch nachfolgend als Treibmittel benötigt.

Nachdem die auf diese Weise vorgetrocknete, homogene Mischung über das Transportband 15 in die Spritzgußmaschine 6 gelangt, wird sie über die Erhitzungseinrichtung 7, die beispielsweise aus einem beheizten, doppelwandigen Zylinder bestehen kann, erhitzt und von der Preßschnecke 19 in aufgeschäumtem, erhitzten Zustand als plastische Masse durch die Düse 8 in eine Spritzgußform 9 gepreßt.

In Fig. 1 befindet sich vor der Spritzgußdüse 8 ein Karussell 20, welches mit mehreren Spritzgußformen 9, 9a,9b,9c bestückt ist und sich in Richtung des Pfeiles 21 in diskontinuierlichen Zeittakten von beispielsweise 20 sek. bis 60 sek. dreht, so daß die dargestellte Spritzgußform 9a nach einem Takt die Lage der Spritzgußform 9c einnimmt und die nachfolgende Spritzgußform 9b vor die Spritzgußdüse 8 gelangt. Während des intervallweisen Schwenkvorganges der einzelnen Spritzgußformen 9,9a,9b,9c in Richtung des Pfeiles 21 geht der Abkühlungsvorgang des in der Form befindlichen Formstückes 22 vonstatten.

Sobald eine Spritzgußform 9 die Position der Spritzgußform 9b erreicht hat, wird die Form gezogen und das Formstück fällt auf die Rutsche 10, die einen sich nach unten verengenden Querschnitt aufweist. Dadurch kann das Formstück 22 unter seiner Schwerkraftkomponente die Rutsche 10 hinuntergleiten, bis es an einem Endschalter 23 anstößt, der sodann die Anstechvorrichtung 11 mit den beiden Anstechnadeln lla und Ilb in Tätigkeit setzt, und das Formstück 22 von zwei Seiten her ansticht. Durch diese Anstichöffnungen des relativ dichten Gefüges im Randaußenbereich der Querschnittsform eines Formstückes kann sodann das vornehmlich im Kern enthaltene Wasserdampf/Luftgemisch entweichen und dadurch das Formstück 22 seine ursprüngliche, den Spritzgußformen 9 entsprechende, ebene Außen-Flächenform einnehmen. Dabei konnten in Versuchen keine Einfallerscheinungen festgestellt werden.

Beim Verschwenken des Karussells 20 in Verbindung mit den Spritzgußformen 9, 9a, 9b, 9c bleibt die Düse 8 durch einen nicht dargestellten Verschluß verschlossen.

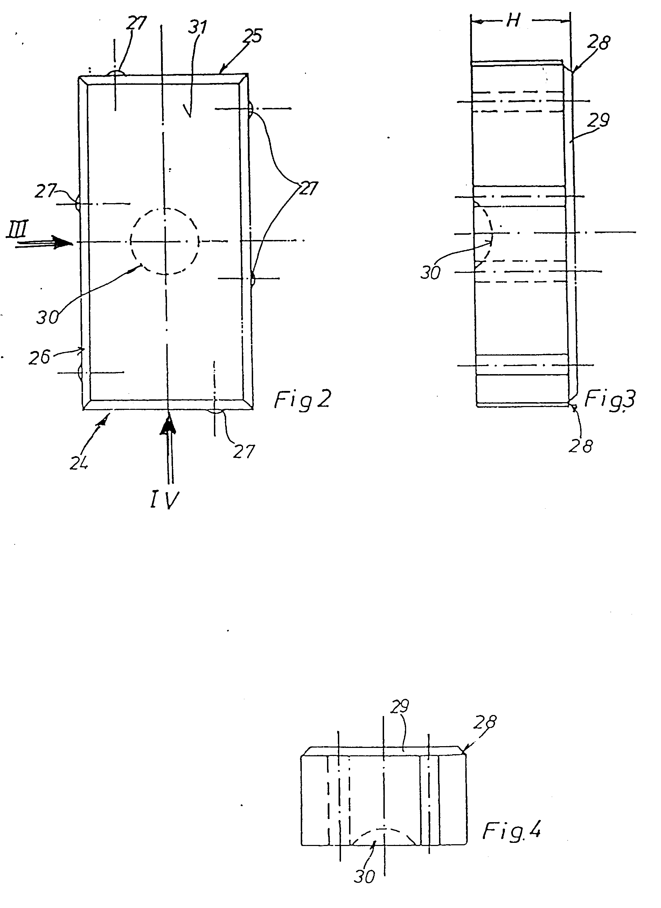

Eine erste Ausführungsform eines mit dieser vorgeschlagenen Vorrichtung nach dem erfindungsgemäßen Verfahren hergestellten Formsteines 24 ist in den Fig. 2 bis 4 dargestellt. Dieser quaderförmige Formstein 24 weist die Form eines Verbundsteines mit einer Größe von 200 mm x 100 mm x 60 mm und einem Gewicht von ca. 840 g auf. Das Gewicht kann je nach den Mischungsalternativen bei dieser Größenordnung zwischen 800 g und 900 g schwanken. An den Seitenkanten 25,26 ist dieser Formstein 24 mit Abstandsleisten 27 versehen, die sich nahezu über seine gesamte Höhe H erstrecken und im Querschnitt entweder eine Rechteckform oder wie dargestellt eine Kreisabschnittsform aufweisen. An seinen Oberflächenkanten 28 ist der Formstein 24 mit einer etwa unter 45° verlaufenden und ca. 6 mm bis 10 mm breiten umlaufenden Randfase 29 versehen.

Durch die Abstandsleisten wird zwischen zwei benachbarten Verbundsteinen 24 eine Fuge zur Verfüllung und zur Verfestigung mit herkömmlichen Baumaterialien bei der Verlegung dieser Formsteine sichergestellt. An seiner Unterseite weist der Formstein 24 eine kalottenartige Vertiefung 30 auf, die durch die Spritzgußform bedingt ist.

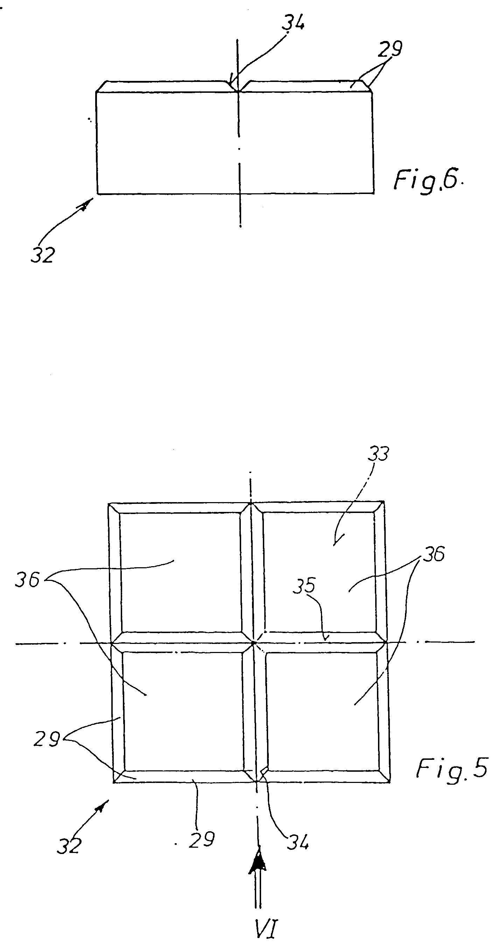

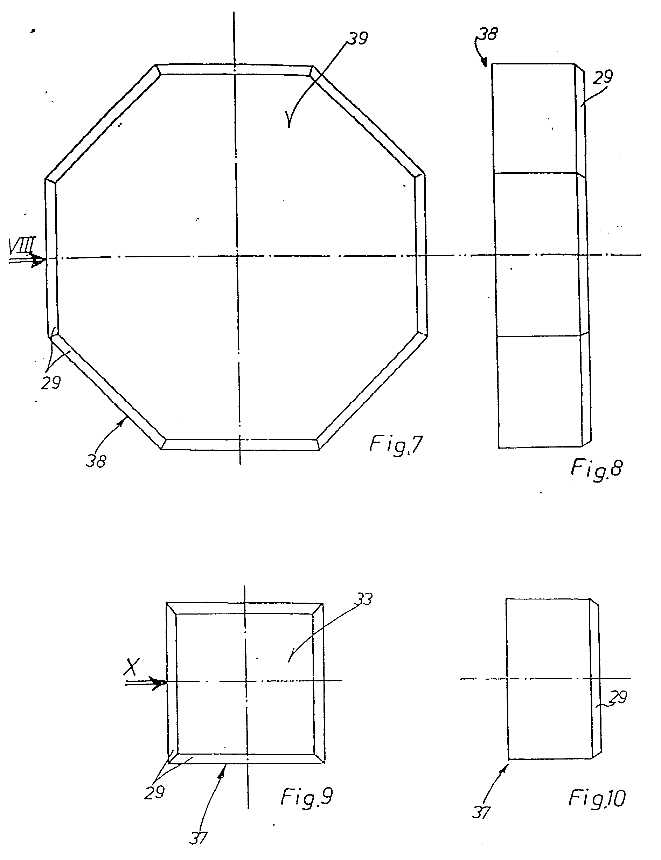

Im Ausführungsbeispiel der Fig. 2 ist die Trittfläche 31 rechteckig ausgebildet. Sie kann jedoch auch - wie in den Ausführungsbeispielen der Fig. 5 und 9 - quadratisch ausgebildet sein. So ist der Formstein 32 gemäß den Fig. 5 und 6 mit einer quadratischen Trittfläche 33 versehen, in welche zur Erhöhung der Rutschfestigkeit Riefen bzw. Rillen 34, 35 kreuzweise eingelassen sind, wodurch sich vier kleinere quadratische Flächen 36 ergeben. Sowohl der quadratische Formstein 32 gemäß den Fig. 5 und 6 als auch der Formstein 37 gemäß den Fig.9 und 10 ist mit den gleichen Randfasen 29 des Formsteines 24 versehen.

Beim Ausführungsbeispiel der Fig. 7 und 8 ist der Formstein 38 mit einer achteckigen Trittfläche 39 ausgebildet und weist die gleichen Randfasen 29 wie die Formsteine 24 und 32 gemäß den Fig. 2 bis 5 auf. Es versteht sich, daß die Trittfläche 30 dieses Formsteines auch sechseckig, dreieckig, mehreckig und auch kreisförmig ausgebildet sein kann.

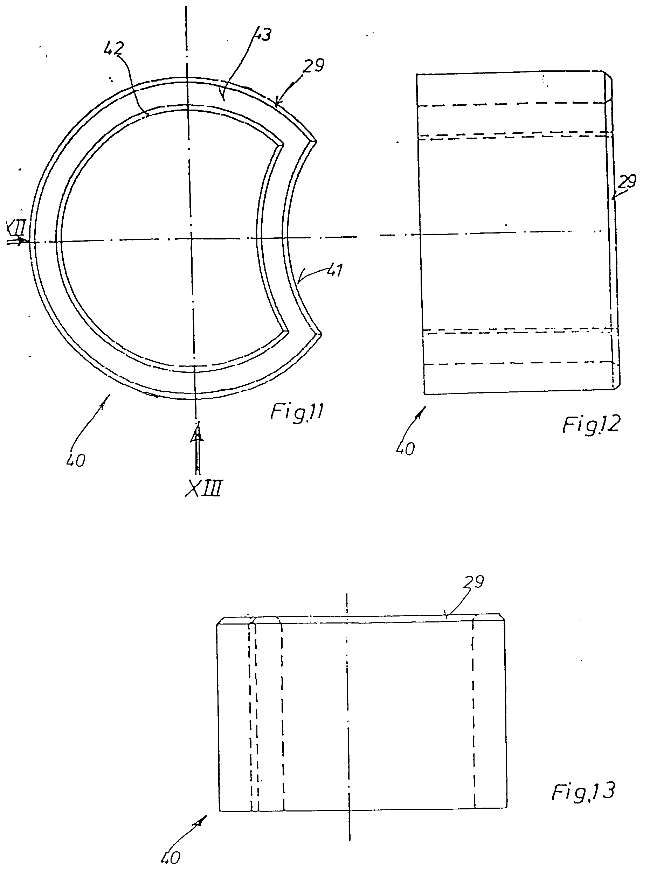

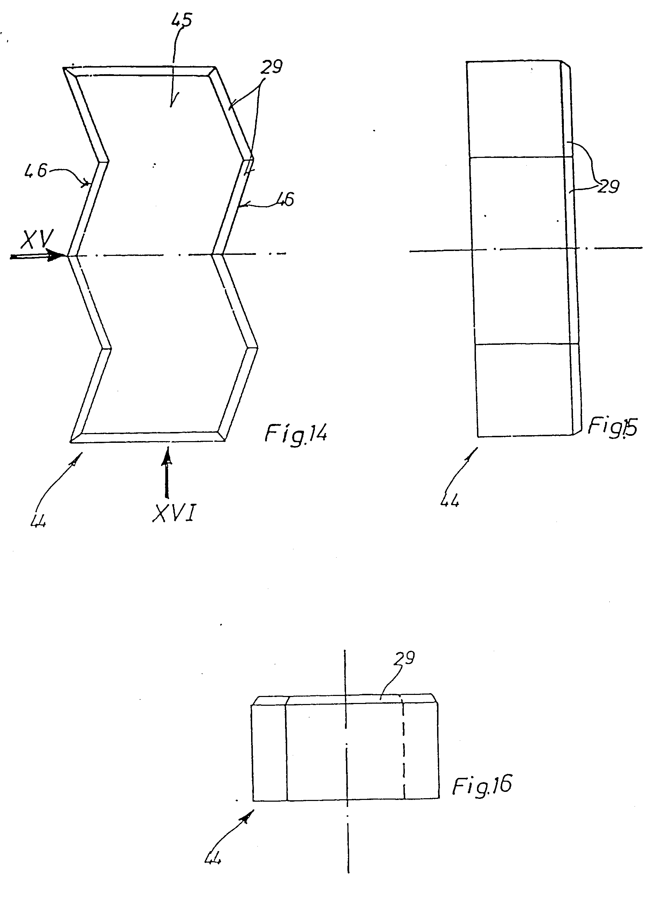

In den Fig. 11 bis 13 ist ein Gitterstein 40 in Form eines Kreisringes mit konkavem Ringabschnitt 41 dargestellt. Die umlaufenden Randfasen 29, 42 an der Außen- und Innenumfangsseite dieses Gittersteines 40 entsprechen denen der Fig. 2 bis 10. Es versteht sich, daß auch ein Gitterstein mit gleicher Außenkonfiguration in Form einer geschlossenen Kreisscheibe mit konkavem Kreisabschnitt hergestellt werden kann. In diesem Fall würde die innere Randfase 42 entfallen und der gesamte Trittbereich 43 wäre vollständig von Material ausgefüllt. Fig. 12 zeigt die Ansicht des Formsteines 40 in Richtung des Pfeiles XII von Fig. 11 und Fig 13 zeigt die Ansicht des Formsteines 40 von Fig. 11 in Richtung des Pfeiles XIII.

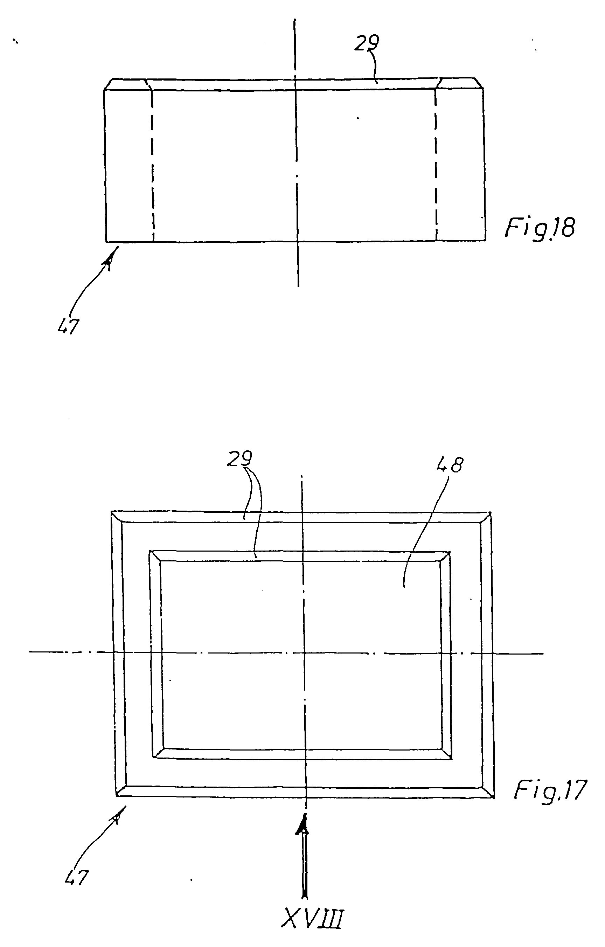

In den Fig. 14 bis 16 ist ein Gitterstein 44 mit einer zick-zack-förmigen Trittfläche 45 dargestellt, der gleichfalls mit einer umlaufenden Randfase 29 versehen ist. Die zick-zack-förmig verlaufenden Seitenbereiche 46 können auch gewellt ausgebildet werden. Fig. 15 zeigt den Formstein 44 in Richtung des Pfeiles XV von Fig. 14, und Fig. 16 zeigt die Stirnansicht entlang des Pfeiles XVI von Fig. 14.

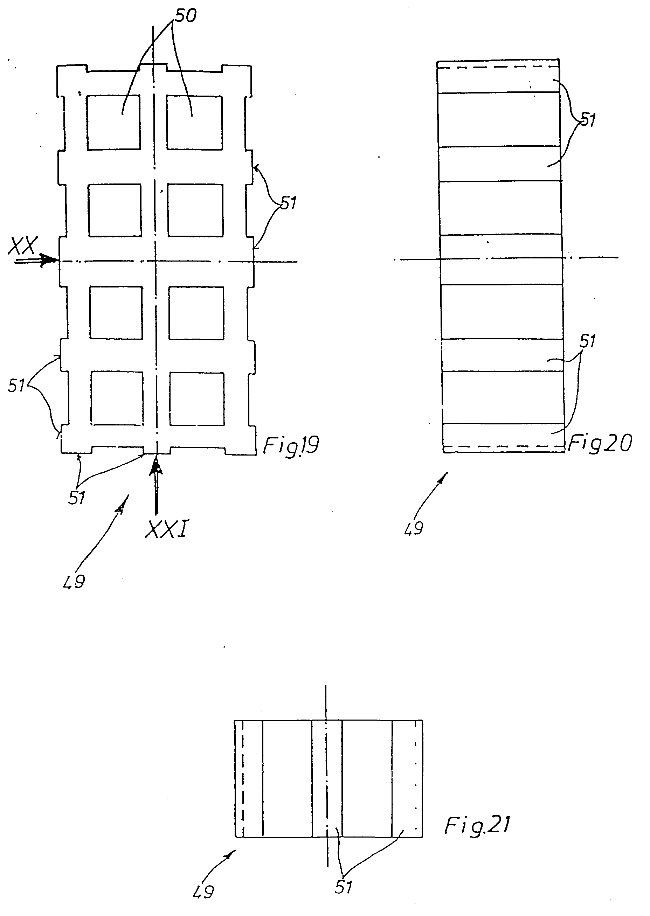

Die Fig. 17 und 18 zeigen einen rechteckförmigen Gitterstein 47 mit rechteckiger Öffnung 48 sowie innen- und außenrandseitig umlaufender Randfase 29. Fig. 18 zeigt den Gitterstein 47 von Fig. 17 in Richtung des Pfeiles XVIII von Fig. 17.

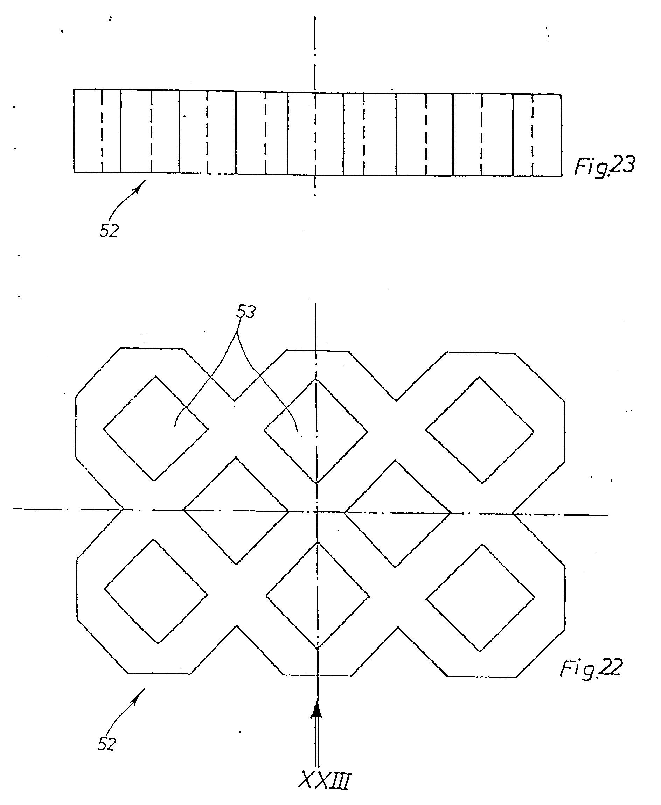

Die Fig. 19 bis 21 zeigen einen Gitterstein 49 mit quadratischen Gitteröffnungen 50 in Reihenanordnung sowie mit angeformten Abstandsleisten 51 mit einer rechteckigen Querschnittsform. Fig. 20 zeigt den Gitterstein in Richtung des Pfeiles XX und Fig. 21 in Richtung des Pfeiles XXI von Fig. 19.

Die Fig. 22 und 23 zeigen einen Gitterstein 52 mit gleichmäßigen quadratischen Öffnungen 53 in Diagonalanordnung. Fig. 23 zeigt die Ansicht in Richtung des Pfeiles XXIII von Fig. 22.

Zur Erhöhung der Rutschfestigkeit der sichtbaren Trittfläche 31,33,39,45 können die Formstücke 24,32,37,38 und 44 nicht nur mit den Riefen bzw. Rillen 34,35 der Fig. 5 und 6 versehen werden, die entweder symmetrisch oder asymmetrisch verlaufen, sondern auch mit figürlichen Mustern von geometrischen Formen, wie Sechsecke, Dreiecke, Vierecke oder sonstige Mehrecke oder auch mit Ornamenten, wie Blumenrosetten ausgestattet sein. Dadurch erhält der Formstein neben einer ansprechenden Farbe durch Einfärbung der jeweiligen Mischungen auch eine ansprechende Optik seiner Trittfläche.

Mit dem vorbeschriebenen Verfahren ist es mit einer relativ einfachen Vorrichtung gelungen, aus hundertprozentigem Abfallmaterial ohne zusätzliche Nichtabfallstoffe als Füllstoff ein Formstück zu produzieren, welches nicht nur als Verfüllmaterial, sondern auch als ansehnliches Baumaterial, z.B. zur Plattierung von Wegen, Straßen und sonstigen Flächen, wiederverwendet werden kann, welches sich durch eine hohe mechanische und thermische Belastbarkeit sowie eine Resistenz gegenüber Säuren und Basen auszeichnet.

Eine wesentliche Komponente des Verfahrens zur Herstellung der Formstücke besteht darin, daß der zugesetzte oder im Material verbliebene Anteil von Wasser nach dem Einfüllen der plastifizierten Masse in die Form vergast. Durch diese Überführung des flüssigen Wassers in Wasserdampf entsteht eine Gasströmung vom Innneren des Formstückes in Richtung auf die äußere Begrenzung. Bei der bereits beschriebenen Variante wird das Verfahren derart durchgeführt, daß zunächst das thermoplastische Material gemeinsam mit der Feuchtigkeitskomponente in eine gasdichte Form eingefüllt wird und innerhalb der Form eine Verdrängung der niedrig schmelzenden plastifizierten Anteile in einen äußeren Bereich des Materials erfolgt. Nach einem Entformen des Formstückes wird der Vergasungsvorgang fortgesetzt, und aufgrund des innerhalb des Formstückes herrschenden Druckes entsteht eine nach außen gerichteten Wölbung der Begrenzungsflächen des Formstückes. Diese Verformung kann durch das beschriebene Anstechen rückgängig gemacht werden, so daß eine erforderliche Maßgenauigkeit eingehalten werden kann.

Eine weitere Verfahrensvariante besteht darin, daß im Bereich der Form Entgasungsbohrungen oder Einsätze aus einem porösen Material vorgesehen werden, die einen Gasdurchtritt ermöglichen. Derartige poröse Materialien, insbesondere in der Form von porösen Pfropfen, sind bereits in der DE-OS 41 28 438 beschrieben. Hier dienen diese porösen Materialien dazu, Druckluft in eine Form einzuleiten, um ein Luftpolster bei der Herstellung von Behältern aus Kunststoff bereitzustellen. Es ist jedoch ebenfalls denkbar, derartige Materialien zu verwenden, um gasförmige Substanzen aus dem Innenraum einer Form abgzuleiten. Wird ein derartiges Material oder werden Bohrungen, die mit einer Umgebung in Verbindung stehen, in die Form zur Herstellung des spritzgegossenen Gegenstandes eingebracht, so kann bereits innerhalb der Form bei dem noch weichplastifizierten Material die vorgesehene Gasströmung aus dem Bereich des Innenraumes in den Bereich des Außenraumes erfolgen. Hierdurch werden insbesondere die niedrigschmelzenden Anteile von der Gasströmung in den äußeren Bereich des Formstückes verdrängt. Es entsteht somit eine Hülle des Formstückes, die sehr dicht ist und einen relativ hohen Reinheitsgrad aufweist. Im plastifizierten Material enthaltene Verunreinigungen werden hierdurch weitgehend abgekapselt und können nicht ausgewaschen oder ausgeschwemmt werden.

Als besonders zweckmäßig hat es sich erwiesen, einen Anteile von 3 bis 5 Gewichtsprozenten Wasser vorzusehen.

## Patentansprüche

1. Verfahren zur Herstellung von Formstücken aus verschiedenen Fraktionen von Kunststoffen, die zerkleinert, gemischt, erwärmt und mindestens teilweise plastifiziert werden sowie bei dem die plastifizierte Kunststoffmasse in eine Form (9,9a,9b,9c) eingespritzt wird und bei dem niedrigschmelzende Anteile der Kunststoffmasse in einen äußeren Bereich des geformten unausgehärteten Formstückes transportiert werden, dadurch gekennzeichnet, daß in einem inneren Bereich des Formstückes eine grobere Struktur als in einem äußeren Bereich des Formstückes erzeugt wird, daß im äußeren Bereich des Formstückes Polyethylen als Bindemittel verwendet wird und daß entlang mindestens eines Teiles eines äußeren Umfanges der Formstücke Abstandsleisten durch den Spritzgußvorgang ausgeformt werden.

2. Verfahren nach Anspruch 1, dadurch gekennzeichnet, daß im Bereich der Form (9,9a,9b,9c) mindestens einige poröse Elemente angeordnet werden, die einen Innenraum der Form (9,9a,9b,9c) gasdurchlässig mit einer Umgebung verbinden.

3. Verfahren nach Anspruch 1, dadurch gekennzeichnet, daß im Bereich der Form (9,9a,9b,9c) mindestens einige Entgasungskanäle angeordnet werden, die einen Innenraum der Form (9,9a,9b,9c) gasdurchlässig mit einer Umgebung verbinden.

4. Verfahren nach einem der Ansprüche 1 bis 3, dadurch gekennzeichnet, daß der Kunststoffmasse 3 bis 5 Gewichtsprozente Wasser als Treibmittel zugesetzt werden.

5. Verfahren nach einem der Ansprüche 1 bis 4, dadurch gekennzeichnet, daß vor der Plastifizierung Kunststoff-Abfälle der Abfallindustrie sowie Füllstoffe, insbesondere Zellstoffe und/oder Kunststoff-Teppich-Reste, auf eine maximale Korngröße von 10 mm gemahlen, sodann in folgenden alternativen Gewichtsprozenten
a) 70 % bis 90 % Kunststoffe des Haushaltsabfalls und 10 % bis 30 % aus Kunststoff-Teppichresten mit Polyamiden, Acrylen, Klebern, Gummi und Schaumstoff oder
b) 70 % bis 90 % Kunststoffe des Haushaltsabfalls und 10 % bis 30 % Abfall-Reste aus der Herstellung von sanitären Produkten, wie Windelhöschen, Slip-Einlagen, Betteinlagen etc., mit Zellstoff, Polyethylenfolie und feuchtigkeitsbindendem Polyacrylat oder
c) 70 % bis 90 % Kunststoffe des Haushaltsabfalls (duales System), 5 % bis 15 % Kunststoff-Teppichreste mit Polyamiden, Acrylen, Klebern, Gummi und Schaumstoff und 5 % bis 15 % Abfall-Reste aus der Herstellung von sanitären Produkten, wie Windelhöschen, Slip-Einlagen, Betteinlagen etc., mit Zellstoff, Polyethylenfolie und feuchtigkeitsbindendem Polyacrylat,
miteinander gemischt werden, die Mischung auf eine Restfeuchte von 5 % bis 10 % als Treibmittel getrocknet, hiernach auf ca. 150°C erhitzt, in aufgeschäumtem Zustand in eine Spritzgußform (9,9a,9b,9c) gepreßt sowie anschließend die Restfeuchte zum größten Teil durch Entgasen des Formstückes entlüftet wird.

6. Verfahren nach einem der Ansprüche 1 bis 5, dadurch gekenndie zeichnet, daß Kunststoff-Abfälle der Abfallindustrie aus Folien von Hoch- und Niederdruck-Polyethylen, aus Behältern von Hoch- und Niederdruck-Polyethylen und Polypropylen sowie aus Bechern von Polypropylen und Polystyrol zusammengesetzt werden.

7. Verfahren nach einem der Ansprüche 1 bis 6, dadurch gekennzeichnet, daß die fertige Mischung mit einer Korngröße von maximal 10 mm mit einem Feuchtigkeitsgehalt von 5 % bis 10 %, bezogen auf die Trockensubstanz in einer Spritzgußmaschine (6) auf ca. 150°C erhitzt und die sich nach Erhitzung ergebende, aufgeschäumte, plastische Formmasse mittels einer Spritzgußmaschine (6) in Formen (9,9a,9b,9c) eingespritzt wird.

8. Formstück aus verschiedenen Fraktionen thermoplastischer Kunststoffe, das aus einem thermoplastisch erhitzten, mit einem Treibmittel aufgeschäumten, in einer Spritzgußform (9,9a,9b,9c) gepreßten sowie entlüfteten und gekühlten Formstein (24,32,37,38,40,44,47,49,52) besteht, der aus einer Mischung von Kunststoffabfällen der Abfallindustrie sowie aus Füllstoffen besteht und der in seinen Randbereichen ein dichteres Gefüge als in seinem Kernbereich aufweist, dadurch gekennzeichnet, daß im äußeren Bereich des Formstückes die gut fließfähigen Bestandteile der Kunststoffmasse angeordnet sind und daß nach innen eine zunehmend grobere Struktur vorliegt, daß vor der Plastifizierung der Kunststoffmasse ein Zerkleinern, Mischen sowie Homogenisieren durchgeführt wird, daß die Formstücke Abstandsleisten (27,51) aufweisen und daß die Kunststoffmasse Polyäthylen enthält.

9. Formstück nach Anspruch 8, dadurch gekennzeichnet, daß die Formsteine (24,49) an ihren Seitenkanten mit angeformten Abstandsleisten (27,51) versehen sind.

10. Formstück nach Anspruch 8 oder 9, dadurch gekennzeichnet, daß sich die Abstandsleisten (27,51) nahezu über die gesamte Höhe (H) des Formsteines 32,37,45) erstrecken und im Querschnitt entweder eine Kreisabschnittsform oder eine Rechteckform aufweisen.
